Europäisches Patentamt

European Patent Office

Office européen des brevets

(11) Veröffentlichungsnummer: **0 296 489 B1**

(12) **EUROPÄISCHE PATENTSCHRIFT**

(45) Veröffentlichungstag der Patentschrift: **08.09.93**

(51) Int. Cl.⁵: **C08G 59/40**, C09D 5/44

(21) Anmeldenummer: **88109634.1**

(22) Anmeldetag: **16.06.88**

(54) **Stickstoffbasische Gruppen tragendes Kunstharz, dessen Herstellung und Verwendung.**

(30) Priorität: **25.06.87 DE 3720956**

(43) Veröffentlichungstag der Anmeldung:
**28.12.88 Patentblatt 88/52**

(45) Bekanntmachung des Hinweises auf die
Patenterteilung:
**08.09.93 Patentblatt 93/36**

(84) Benannte Vertragsstaaten:
**AT BE CH DE ES FR GB IT LI NL SE**

(56) Entgegenhaltungen:
EP-A- 0 184 152
EP-A- 0 198 783
DE-A- 3 325 061
US-A- 4 017 438

(73) Patentinhaber: **BASF Lacke + Farben AG**
**Glasuritstrasse 1**
**D-48165 Münster-Hiltrup(DE)**

(72) Erfinder: **Perner, Thomas, Dr.**
**Berner Weg 24**
**D-6700 Ludwigshafen(DE)**
Erfinder: **Osterloh, Rolf, Dr.**
**Am Kapellenbusch 2**
**D-5042 Erfstadt(DE)**
Erfinder: **Schupp, Eberhard, Dr.**
**Theodor-Storm-Strasse 29**
**D-6718 Gruenstadt(DE)**
Erfinder: **Schwerzel, Thomas, Dr.**
**Budapester Strasse 51**
**D-6700 Ludwigshafen(DE)**
Erfinder: **Ahlers, Klaas, Dr.**
**Foehrenweg 21**
**D-4400 Muenster(DE)**

(74) Vertreter: **Langfinger, Klaus-Dieter, Dr. et al**
**BASF Aktiengesellschaft, Patentabteilung**
**ZDX - C 6**
**D-67056 Ludwigshafen (DE)**

**Beschreibung**

Die vorliegende Erfindung betrifft stickstoffbasische Gruppen tragende, durch Protonierung mit Säure wasserverdünnbare Kunstharze, deren Herstellung und Verwendung als Überzugsmittel, insbesondere für die kathodische Elektrotauchlackierung.

Stickstoffbasische Gruppen tragende Kunstharze sind bekannt. So wird in der DE-OS 33 25 061 ein stickstoffbasische Gruppen tragendes, durch Protonierung mit Säure wasserverdünnbares Harz beschrieben, das durch Reaktion von

A) mindestens einem Epoxidharz mit einem mittleren Molekulargewicht $M_n$ von 300 bis 6000 und im Mittel 1,5 bis 3,0 Epoxidgruppen pro Molekül

mit

B) einem Diketimin eines diprimären Amins

und gegebenenfalls

C) einem sekundären Amin, das gegebenenfalls zusätzlich eine tertiäre Aminogruppe enthält, einem Ketimin eines primären Monoamins und/oder einem Ketimin eines primär/tertiären Diamins

erhältlich ist.

Beschichtungen auf dieser Basis zeigen jedoch keinen guten Korrosionsschutz in der Salzsprühnebelprüfung nach DIN 53 167.

Aufgabe der vorliegenden Erfindung war es, ein stickstoffbasische Gruppen tragendes, durch Protonierung mit Säure wasserverdünnbares Kunstharz aufzuzeigen, das nach Protonierung und Verdünnung mit Wasser stabilere Dispersionen und bei Verwendung als Bindemittel für kathodisch abscheidbare Elektrotauchlacke hochelastische Filme mit gutem Korrosionsschutz ergibt.

Überraschenderweise wurde nun gefunden, daß sich stickstoffbasische Gruppen tragende Kunstharze, welche zusätzlich Urethangruppen enthalten, auch bei Verwendung von weniger Säure (z.B. Essigsäure) deutlich besser dispergieren lassen als Bindemittel ohne Urethangruppen, wie z.B. die aus DE-OS 33 25 061. Dieses Verhalten wirkt sich hinsichtlich Dispersionsstabilität und Korrosionsschutzverhalten vorteilhaft aus.

Gegenstand der vorliegenden Erfindung sind stickstoffbasische Gruppen tragende, durch Protonierung mit Säure wasserverdünnbare Kunstharze, erhältlich durch Umsetzung von

A) einem Epoxidharz mit einem mittleren Molekulargewicht $M_n$ von 300 bis 6000 und im Mittel 1,5 bis 3,0 Epoxidgruppen pro Molekül

mit

B) einem Ketimin eines primären Amins, das zusätzlich eine oder mehrere Urethangruppen enthält und gegebenenfalls

C) einem Diketimin eines diprimären Amins, das keine Urethangruppen enthält

und gegebenenfalls

D) einem sekundären Amin, das gegebenenfalls zusätzlich eine tertiäre Aminogruppe enthält, einem Ketimin eines primären Monoamins und/oder einem Ketimin eines primär/tertiären Diamins.

Gegenstand der vorliegenden Erfindung ist auch ein stickstoffbasische Gruppen tragendes, durch Protonierung mit Säure wasserverdünnbares Kunstharz, dessen Hydroxylgruppen zusätzlich zumindest teilweise mit teilgeblocktem Polyisocyanat zu Urethangruppen umgesetzt sind.

Gegenstand der vorliegenden Erfindung ist außerdem die Verwendung der erfindungsgemäßen, durch Protonierung mit Säure wasserverdünnbaren Kunstharze in Form wäßriger Dispersionen, die gegebenenfalls zusätzlich Vernetzer, organische Lösemittel, Pigmente und/oder weitere Hilfsstoffe enthalten, als Überzugsmittel, insbesondere für die kathodische Elektrotauchlackierung elektrisch leitfähiger Substrate.

Gegenstand der vorliegenden Erfindung sind auch Überzugsmittel, die als Bindemittel das erfindungsgemäß hergestellte stickstoffbasische Gruppen tragende Kunstharz und zusätzlich einen Vernetzer enthalten.

Desgleichen bezieht sich die vorliegende Erfindung auf mit Lacküberzügen versehene Gegenstände, die durch Aufbringen der erfindungsgemäß hergestellten Kunstharze bzw. Überzugsmittel und Einbrennen erhalten worden sind.

Zu den Aufbau-Komponenten der erfindungsgemäßen Kunstharze und deren Herstellung ist im einzelnen folgendes zu sagen:

Als Epoxidharze (A) können beliebige Materialien verwendet werden, sofern sie ein mittleres Molekulargewicht $M_n$ von 300 bis 6000 und im Mittel 1,5 bis 3,0 Epoxidgruppen pro Molekül enthalten, vorzugsweise Verbindungen mit zwei Epoxidgruppen pro Molekül. Bevorzugt sind Epoxidharze mit mittleren Molekularge-

wichten $M_n$ von 350 bis 5000, insbesondere 350 bis 2000. Besonders bevorzugte Epoxidharze sind z.B. Glycidylether von im Mittel mindestens zwei phenolische Hydroxylgruppen pro Molekül enthaltenden Polyphenolen, die sich in üblicher Weise durch Veretherung mit einem Epihalohydrin in Gegenwart von Alkali herstellen lassen.

Beispiele für geeignete Phenolverbindungen sind Bis-(4-hydroxy-tert.-butyl-phenyl)-2,2-propan, 4,4'-Dihydroxybenzophenon, Bis-(4-hydroxyphenyl)-1,1-ethan, Bis-(4-hydroxyphenyl)-1,1-isobutan, Bis-(4-hydroxy-tert.-butyl-phenyl)-2,2-propan, Bis-(2-hydroxynaphthylmethan, 1,5-Dihydroxynaphthalin. In manchen Fällen ist es wünschenswert, aromatische Epoxidharze mit höherem Molekulargewicht einzusetzen. Diese werden erhalten, indem man die oben genannten Diglycidylether mit einem Polyphenol, wie beispielsweise Bis-(4-hydroxyphenyl)-2,2-propan reagieren läßt und dann die erhaltenen Produkte mit Epichlorhydrin unter Herstellung von Polyglycidylethern weiter umsetzt.

Eine andere geeignete Klasse von Epoxidharzen sind Polyglycidylether von phenolischen Novolakharzen.

Ebenfalls geeignet sind Polyglycidylether von mehrwertigen Alkoholen, wie Ethylenglykol, Diethylenglykol, Triethylenglykol, 1,2-Propylenglykol, 1,3-Propandiol, 1,5-Pentandiol, 1,2,6-Hexantriol, Glycerin und Bis-(4-hydroxycyclohexyl)-2,2-propan.

Es können auch Polyglycidylester von Polycarbonsäuren verwendet werden.

Unter den erfindungsgemäß bevorzugten Polyglycidylethern von Polyphenolen sind diejenigen mit Epoxidäquivalentgewichten im Bereich von 180 bis 1000 besonders bevorzugt.

Aromatische Polyepoxide mit einem höheren Epoxidäquivalentgewicht können aus solchen mit einem niedrigeren Epoxidäquivalentgewicht und Polyphenolen vor oder während der Umsetzung mit den Komponenten (B), (C) und (D) hergestellt werden.

Als Ketimine primärer Amine (B), welche zusätzlich eine oder mehrere Urethangruppierungen enthalten, werden Umsetzungsprodukte aus ketiminisierten Alkanolaminen und Mono- bzw. Diisocyanaten, welche gegebenenfalls zusätzlich mit Mono- oder Dialkoholen umgesetzt werden, eingesetzt.

Für die Herstellung ketiminisierter Alkanolamine können Alkanolamine mit mindestens 2 C-Atomen eingesetzt werden wie Ethanolamin, 2-Amino-1-propanol, 3-Amino-1-propanol, 2-Amino-1-butanol, 4-Amino-1-butanol, Neopentanolamin, 5-Aminopentanol, 4-Methyl-4-amino-2-pentanol oder noch längerkettige Alkanolamine. Weiterhin können Alkanolamine, welche zusätzlich eine oder mehrere Ethergruppierung(en) enthalten, wie z.B. 2-Aminoethoxyethanol oder höhere Analoga verwendet werden. Bevorzugt werden Ethanolamin und 2-Aminoethoxyethanol.

Die Ketimine obiger Alkanolamine lassen sich leicht aus Ketonen und primären Alkanolaminen unter Entfernung des Reaktionswassers, z.B. durch azeotrope Destillation, erhalten.

Beispiele geeigneter Ketone sind:

Aceton, Methylethylketon, Methylpropylketon, Methylisopropylketon, Methylisobutylketon, Methylisoamylketon, Diethylketon, Dipropylketon, Cyclohexanon. Bevorzugte Ketone sind Aceton, Methylethylketon und Cyclohexanon, insbesondere Methylisobutylketon.

Als Isocyanatkomponenten sind sowohl Mono- als auch Diisocyanate beliebiger Struktur geeignet. Bevorzugt sind aliphatische Diisocyanate, wie z.B. Isophorondiisocyanat und Hexamethylendiisocyanat.

Zur weiteren Elastifizierung dieser aminogruppenhaltigen Urethane eignen sich aliphatische und aromatische Diole mit und ohne Ethergruppen, langkettige Monoalkohole sowie Polyester- und Polyetherole, welche zusammen mit dem ketiminisierten Aminoalkohol mit der Isocyanatkomponente umgesetzt werden. Besonders bevorzugt sind Mono- und Diole mit einer C-Atomzahl von 4 bis 20 sowie Polycaprolactondiole mit Molekulargewichten von 500 bis 2000.

Die Umsetzung verläuft unter so schonenden Bedingungen, daß eine Addition der Ketimingruppen an die Isocyanatgruppen praktisch ausgeschlossen ist und fast ausschließlich OH-Addition stattfindet. Die Äquivalentverhältnisse können so eingestellt werden, daß die alkoholischen Komponenten sowohl in stöchiometrischer Menge als auch im Überschuß, bezogen auf die Anzahl der Isocyanatgruppen, eingesetzt werden, wobei das Äquivalentverhältnis von Isocyanat zu elastifizierendem Mono- bzw. Dialkohol und ketiminisiertem Alkanolamin vorzugsweise 1:0,1 -1,9:0,9 - 0,1 beträgt. Auf diese Weise werden Oligourethane mit mindestens 1 Urethangruppe in der Kette und bis zu 2 Ketimingruppen am Kettenende erhalten. Die Aminzahlen liegen im Bereich zwischen 30 und 200 mg KOH/g, bevorzugt zwischen 50 und 100 mg KOH/g.

Als gegebenenfalls mitzuverwendende Diketimine primärer Diamine (C) ohne Urethangruppen können die Ketimine aus beliebigen Ketonen mit beliebigen primären Diaminen eingesetzt werden. Derartige Ketimine lassen sich leicht aus Ketonen und primären Diaminen unter Entfernung des gebildeten Wassers, z.B. durch azeotrope Destillation, erhalten.

Als primäre Diamine sind beispielsweise solche geeignet, die keine weiteren mit Epoxidgruppen unter milden Bedingungen reaktive Gruppen enthalten. Sie dürfen z.B. keine sekundären Aminogruppen oder Mercaptangruppen enthalten, während alkoholische Hydroxylgruppen aufgrund ihrer Reaktionsträgheit nicht stören. Beispiele geeigneter primärer Diamine sind Ethylendiamin, 1,3-Diaminopropan, 1,4-Diaminobutan, 1,6-Diaminohexan, 4,9-Dioxadodecandiamin-1,12, 4,4'-Diaminodicyclohexylmethan, 9-Aminomethyl-stearylamin, 2-(3-Aminopropyl)-cyclohexylamin, sowie verzweigte Diamine, wie z.B. 2-Methylpentandiamin und 2-Ethylbutandiamin.

Neben derartigen Polyaminen mit niedrigem definiertem Molekulargewicht sind auch oligomere oder polymere Polyamine mit mittleren Molekulargewichten $M_n$ bis zu 3000 einsetzbar. Beispiele solcher Polyamine sind Diamine, die durch reduktive Cyanethylierung von Polyolen, wie Polytetrahydrofuran herstellbar sind. Derartige Produkte enthalten endständige primäre Aminogruppen in Form von Aminopropoxygruppen.

Als Ketone sind vor allem solche geeignet, die außer der Ketogruppe keine weitere gegenüber einer primären Amingruppe reaktive Gruppierung enthalten. Beispiele geeigneter Ketone sind Aceton, Methylethylketon, Methylpropylketon, Methylisopropylketon, Methylisobutylketon, Methylisoamylketon, Diethylketon, Dipropylketon, Cyclohexanon. Besonders bevorzugte Ketone sind Aceton, Methylethylketon und Methylisobutylketon.

Als gegebenenfalls mitzuverwendende sekundäre Amine (D) können beliebige nichtaromatische Amine eingesetzt werden, z.B. Dialkylamine wie Dimethylamin, Diethylamin, Dipropylamin oder Dibutylamin. Bevorzugt sind jedoch Alkanolamine, wie z.B. Methylethanolamin, Ethylethanolamin, Diethanolamin, Methylisopropanolamin, Ethylisopropanolamin und Diisopropanolamin. Als sekundäre Amine (D) sind auch solche geeignet, die noch eine zusätzliche tertiäre Aminogruppe aufweisen, wie beispielsweise N,N-Diethyl-N'-isobutyl-propylendiamin-1,3 und N,N-Bis-(2-hydroxyethyl)-N'-isobutyl-propylendiamin-1,3.

Zuweilen kann es zweckmäßig sein, als Komponente (D) zusätzlich Ketimine von primären Monoaminen einzusetzen. Vor allem Ketimine langkettiger primärer Monoamine, wie z.B. Octylamin, Laurylamin, Stearylamin oder Amidaminen aus primären Diaminen und Monocarbonsäure, wie Ethylhexansäure oder höherer Fettsäuren, können zur Plastifizierung der aus den erfindungsgemäßen Kunstharzen hergestellten Überzüge verwendet werden.

Schließlich können auch noch Monoketimine von primär/tertiären Diaminen als Komponente (D) eingesetzt werden. Beispiele hierfür sind die Ketimine des N,N-Diethyl-ethylendiamin und des N,N-Diethyl-propylendiamin-1,3. Diese Amine sind leichter zugänglich als oben genannte sekundäre/tertiäre Diamine, und über ihre Ketimine können zusätzlich basische Gruppen in die Harze eingebaut werden.

Die Mengenverhältnisse der Komponenten (A), (B) und gegebenenfalls (C) und (D) sind in weiten Grenzen variierbar. Für die meisten erfindungsgemäßen Anwendungszwecke ist es wünschenswert, epoxidgruppenfreie Kunstharze herzustellen. Pro Epoxidäquivalent des Epoxidharzes werden daher im allgemeinen 1 bis 2 Äquivalente der Ketimine und sekundären Amine der Komponenten (B), (C) und (D) eingesetzt. Bei Produkten, die keine Komponente (D) und eine difunktionelle Komponente (B) enthalten, wird das Molekulargewicht des erfindungsgemäßen Kunstharzes durch das Äquivalentverhältnis zwischen Epoxidgruppen und Ketimingruppen reguliert. Pro Epoxidäquivalent des Epoxidharzes (A) werden dann bevorzugt 1,5 bis 2 Äquivalente der Ketimine der Komponenten (B) und (C) eingesetzt. Wird zusätzlich Komponente (D) eingesetzt, so wird das erreichbare Molekulargewicht zusätzlich durch die Menge an - monofunktioneller - Komponente (D) begrenzt. Dadurch ist es auch möglich, die Summe der eingesetzten Äquivalente (B), (C) und (D) gleich den Äquivalenten an (A) zu wählen.

Die mittlere Molekulargewichte $M_n$ der erfindungsgemäßen Kunstharze sollten etwa 1000 bis 10.000 betragen, für viele Zwecke, z.B. für die Herstellung von kataphoretisch abscheidbaren wäßrigen Lacksystemen, sind mittlere Molekulargewichte $M_n$ von 1500 bis etwa 5000 anzustreben.

Die Umsetzung der Komponenten (A), (B) und gegebenenfalls (C) und (D) wird zweckmäßigerweise in Gegenwart von Lösemitteln, z.B. Kohlenwasserstoffen wie Toluol oder Xylol, Ketonen, wie Methylethylketon oder Methylisobutylketon, Alkoholen wie Ethanol, Butanol, Estern, Ethern oder dergleichen bei Temperaturen von 50 bis 150°C, vorzugsweise 80 bis 130°C durchgeführt.

Die erfindungsgemäßen Kunstharze enthalten nach der Behandlung mit Wasser Hydroxylgruppen, sekundäre Aminogruppen und zusätzlich primäre und/oder tertiäre Aminogruppen. Sie sind daher einer Vielzahl von Vernetzungsreaktionen zugänglich, was sie nach Zumischung geeigneter Vernetzer zu wertvollen Lackbindemitteln macht.

Geeignete Vernetzer für die erfindungsgemäßen Bindemittel sind z.B. Aminoplastharze, wie Harnstoff-Formaldehyd-Harze, Melaminharze oder Benzoguanaminharze, Phenoplastharze, geblockte Isocyanatvernetzer, über Esteraminolyse und/oder Umesterung härtende Vernetzer mit im Mittel mindestens zwei aktivierten Estergruppen pro Molekül, z.B. $\beta$-Hydroxyalkylester-Vernetzer gemäß EP 00 40 867 und Carbalkoxymethylester-Vernetzer gemäß DE-OS 32 33 139, Harnstoffkondensationsprodukte, wie sie beispielsweise aus primären Di- und/oder Polyaminen, sekundären Monoaminen und Harnstoff, gegebenenfalls unter Mitverwendung eines Polyalkohols, wie beispielsweise Trimethylolpropan, erhalten werden, und $\beta$-Hydroxyalkylcarbamat-Vernetzer, wie sie beispielsweise durch Umsetzung polyprimärer Amine mit Ethylencarbonat erhalten werden. Besonders bevorzugt sind Urethangruppen-haltige Vernetzer, z.B. mit Alkoholen verkappte Isocyanate, welche sich besonders gut in Kombination mit den beanspruchten Beindemitteln dispergieren lassen und sowohl in unpigmentierter als auch in pigmentierter Form sehr gute Stabilität zeigen.

Die Mengen an einzusetzenden Vernetzern richten sich nach Art und Anzahl der miteinander reaktiven Gruppen im Kunstharz und Vernetzer und anch dem Grad der erwünschten Vernetzungsdichte. Im allgemeinen werden Kunstharz-Vernetzer-Verhältnisse von 1:9 bis 9:1, vorzugsweise 1:1 bis 9:1, insbesondere 1,5:1 bis 4:1, jeweils bezogen auf das Gewicht, eingesetzt.

Es ist nicht unbedingt nötig, separate Vernetzer zuzusetzen, da Vernetzerfunktionen auch in das erfindungsgemäße Kunstharz eingebaut werden können, so daß es selbstvernetzend wird. Dies kann z.B. erfolgen, indem man nach der Umsetzung von (A), (B) und gegebenenfalls (C) und (D) das resultierende Harz mit einem teilgeblockten Polyisocyanat umsetzt, welches im Mittel noch ca. eine freie Isocyanatgruppe im Molekül enthält. Als Verkappungsmittel können dabei z.B. Alkohole, Phenole und Oxime verwendet werden. Eine weitere Möglichkeit, das erfindungsgemäße Kunstharz selbstvernetzend zu modifizieren, besteht in der Einführung von $\beta$-Hydroxyalkylcarbamatgruppen. Hierzu wird das Keton aus dem erfindungsgemäßen Harz zunächst hydrolytisch abgespalten. Die Entstehenden primären Aminogruppen werden dann beispielsweise mit Ethylencarbonat in $\beta$-Hydroxyethylcarbamate überführt.

Außer Vernetzern können weitere Stoffe wie Pigmente, Hilfsmittel, Lösemittel und Härtungskatalysatoren zugesetzt werden. Die so hergestellten Überzugsmittel können durch übliche Methoden wie Spritzen, Tauchen, Gießen und Rakeln auf Substrate wie Holz, Kunststoff oder Metall aufgebracht werden. Die Aushärtung der Überzüge erfolgt je nach Art des Vernetzers bei 120 bis 210°C während etwa 5 bis 40 Minuten, wobei zur niedrigsten Einbrenntemperatur die längste Einbrennzeit gehört.

Die Aminzahlen der erfindungsgemäßen Kunstharze liegen zwischen ca. 50 und 300 mg KOH/g. Sie lassen sich daher, ggf. auch in Abmischung mit den oben genannten Vernetzern, durch vollständige oder teilweise Protonierung der Aminogruppen in wäßrige Dispersionen überführen, die sich vorteilhaft für die Elektrotauchlackierung elektrisch leitfähiger Substrate, wie z.B. Metallteilen, eignen. Dazu wird ein Neutralisationsmittel, wie z.B. Ameisensäure, Essigsäure, Milchsäure oder Phosphorsäure, eingerührt und mit Wasser auf die Verarbeitungskonzentration verdünnt.

Für die kathodische Elektrotauchlackierung wird im allgemeinen ein Feststoffgehalt des Elektrotauchbades von 5 bis 30 Gew.% eingestellt. Die Abscheidung erfolgt üblicherweise bei Temperaturen von 15 bis 40°C, während einer Zeit von 0,5 bis 5 Minuten und bei pH-Werten von 4,0 bis 8,5, vorzugsweise 5,0 bis 7,5 im allgemeinen bei Abscheidespannungen von 50 bis 500 Volt. Der zu beschichtende elektrisch leitende Körper wird dabei als Kathode geschaltet. Der abgeschiedene Film wird bei Temperaturen oberhalb von 120°C ca. 20 Minuten gehärtet.

I. Herstellung der Ketimine der primären Amine

Komponente 1

In einem Reaktionsgefäß wurden 232 g Hexamethylendiamin, 290 g dimerisierte Fettsäure und 40 g Xylol auf 190°C erhitzt und eine Stunde bei dieser Temperatur gehalten, wobei 29 g einer wäßrigen Phase abgetrennt wurden. Eine Aminbestimmung ergab, daß die Phase aus 18 g Wasser und 11 g Hexamethylendiamin bestand. Dem Ansatz wurden 11 g Hexamethylendiamin und 621 g Methylisobutylketon zugesetzt und unter Rückfluß 54 g Wasser abdestilliert. Das Produkt hatte eine Aminzahl von 155 mg KOH/g und enthielt 30 Gew.% Lösemittel.

Komponente 2

Aus 387 g Hexamethylendiamin, 580 g dimerer Fettsäure und 97 g Leinölfettsäure wurden mit 80 g Xylol innerhalb von 2 Stunden bei 190°C 48 g einer wäßrigen Phase abgetrennt.

Zu 696 g des verbleibenden Kondensats wurden 552 g Methylisobutylketon zugefügt und 44 g Wasser abdestilliert. Das Produkt hatte eine Aminzahl von 122 mg KOH/g und einen Lösemittelgehalt von 30 Gew.%.

Komponente 3

In einem Reaktionsgefäß wurden 630,5 g Aminoethoxyethanol und 974 g Methylisobutylketon unter Abdestillieren von Wasser so lange zum Rückfluß erhitzt bis 105 g Wasser abgetrennt waren. Das Produkt hatte eine Aminzahl von 232 mg KOH/g.

Komponente 4

In einem Reaktionsgefäß wurden 450,6 g 3-Amino-1-propanol und 914,2 g Methylisobutylketon unter Abdestillieren von wasser so lange zum Rückfluß erhitzt bis 107 g Wasser abgetrennt waren. Das Produkt hatte eine Aminzahl von 266 mg KOH/g.

Komponente 5

In einem Reaktionsgefäß wurden 348 g Hexamethylendiamin mit 880 g Methylisobutylketon unter Abdestillieren von Wasser so lange zum Rückfluß erhitzt bis 105 g Wasser abgetrennt waren. Das Produkt hatte eine Aminzahl von 316 mg KOH/g.

II. Herstellung der ketiminisierten Urethangruppen-haltigen Amine

Komponente A1

100,7 g Dipropylenglykol wurden zusammen mit 362,1 g der Komponenten 3 und 0,72 g Dibutylzinndilaurat vorgelegt. Zu dieser Mischung wurden 252,3 g Hexamethylendiisocyanat so zugegeben, daß die Innentemperatur 50°C nicht übersteigt. Nach einer Nachreaktionsphase von 1 h bei 50°C war praktisch kein Isocyanat mehr nachweisbar. Das Produkt hatte eine Aminzahl von 102 mg KOH/g.

Komponente A2

412,5 g Polycaprolactondiol vom Molekulargewicht 550 (Capa 200, Fa. Interox Chem.) wurden zusammen mit 362,1 g der Komponente 3 und 0,95 g Dibutylzinndilaurat vorgelegt. Zu dieser Mischung wurden 252,3 g Hexamethylendiisocyanat so zugegeben, daß die Innentemperatur 50°C nicht überstieg. Nach einer Nachreaktionsphase von 2 h bei 50°C war praktisch kein Isocyanat mehr nachweisbar. Das Produkt hatte eine Aminzahl von 72 mg KOH/g.

Komponente A3

1004,6 g Polycaprolactondiol vom Molekulargewicht 1000 (Capa 210, Fa. Interox Chem.) wurden zusammen mit 482,8 g der Komponente 3 und 3,66 g Dibutylzinndilaurat vorgelegt. In dieser Mischung wurden 336,4 g Hexamethylendiisocyanat so zugegeben, daß die Innentemperatur 50°C nicht überstieg. Nach einer Nachreaktionsphase von 2 h bei 50°C war praktisch kein Isocyanat mehr nachweisbar. Das Produkt hatte eine Aminzahl von 56 mg KOH/g.

Komponente A4

Es wurden 502,3 g Polycaprolactondiol vom Molekulargewicht 1000 (Capa 210, Fa. Interox Chem.) zusammen mit 211 g der Komponente 4 und 18,8 g Dibutylzinndilaurat vorgelegt. Zu dieser Mischung wurden 168,2 g Hexamethylendiisocyanat so zugegeben, daß die Innentemperatur 50°C nicht überstieg. Nach einer Nachreaktionsphase von 2 h bei 50°C war praktisch kein Isocyanat mehr nachweisbar. Das Produkt hatte eine Aminzahl von 55 mg KOH/g.

Komponente A5

Es wurden 222,2 g Isophorondiisocyanat zusammen mit 2,1 g Dibutylzinndilaurat in 55,6 g Toluol gelöst. Zu dieser Lösung wurden bei 50°C 502,3 g Polycaprolactondiol vom Molekulargewicht 1000 (Capa 210, Fa. Interox Chem.) zugegeben. Es wurde bei 80°C für 1 h nachreagieren lassen. Anschließend wurden 241,4 g der Komponente 3 zugegeben, wobei die Innentemperatur 50°C nicht überstieg. Nach einer Nachreaktionsphase von 2 h bei 50°C war praktisch kein Isocyanat mehr nachweisbar. Das Produkt wurde anschließend mit 114 g Toluol verdünnt und hatte eine Aminzahl von 44,6 mg KOH/g.

Komponente A6

Es wurden 252,3 g Hexamethylendiisocyanat zusammen mit 2,4 g Dibutylzinndilaurat in 63,1 g Toluol gelöst. Zu dieser Lösung wurde bei 50°C ein Gemisch aus 301,4 g Polycaprolactondiol vom Molekulargewicht 1000 (Capa 210, Fa. Interox Chem.) und 579,4 g der Komponente 3 zugegeben. Nach einer Nachreaktionsphase von 2 h bei 50°C war praktisch kein Isocyanat mehr nachweisbar. Das Produkt hatte eine Aminzahl von 91 mg KOH/g.

Komponente A7

Es wurden 168,2 g Hexamethylendiisocyanat zusammen mit 2,9 g Dibutylzinndilaurat in 42,1 g Toluol gelöst. Zu dieser Lösung wurde bei 50°C ein Gemisch aus 1004,6 g Polycaprolactondiol vom Molekulargewicht 1000 (Capa 210, Fa. Interox Chem.) und 241,4 g der Komponente 3 zugegeben. Nach einer Nachreaktionsphase von 2 h war praktisch kein Isocyanat mehr nachweisbar. Das Produkt besaß eine Aminzahl von 33 mg KOH/g.

III. Herstellung des erfindungsgemäßen stickstoffbasische Gruppen tragenden Kunstharzes

Komponente B1

207,9 g eines Diglycidylethers aus Bis-(4-hydroxyphenyl)-2,2-propan und Epichlorhydrin mit einem Äquivalentgewicht von 485 und 54,3 g eines analogen Diglycidylethers mit einem Äquivalentgewicht von 190 wurden zusammen mit 60 g Toluol zum Rückfluß erhitzt, um vorhandene Wasserspuren zu entfernen. Anschließend wurden 210,9 g der Komponenten 1 und 22,5 g Diethanolamin zugegeben und auf 120°C erhitzt. Nach 5 Stunden war kein Epoxid mehr nachweisbar. Es wurde mit 11,8 g Butylglykol und 50 g Isobutanol verdünnt. Das Produkt hatte eine Feststoffgehalt von 65 Gew.%.

Komponente B2

214,3 g eines Diglycidylethers aus Bis-(4-hydroxyphenyl)-2,2-propan und Epichlorhydrin mit einem Äquivalentgewicht von 189, 48 g Bis-(4-hydroxyphenyl)-2,2-propan, 210,9 g der Komponente 2, 3,22 g Methylethanolamin und 18 g Diethanolamin wurden vermischt, 90 Minuten bei 85°C und anschließend 90 Minuten bei 100°C gehalten. Danach wurde mit 14,3 g Butylglykol und 107 g Isobutanol auf einen Feststoffgehalt von 65 Gew.% verdünnt.

Komponente B3

314,9 g eines Diglycidylethers aus Bis-(4-hydroxyphenyl)-2,2-propan und Epichlorhydrin mit einem Äquivalentgewicht von 485, 134,8 g Bis-(4-hydroxyphenyl)-2,2-propan wurden zusammen mit 91,5 g Toluol zum Rückfluß erhitzt, um vorhandene Wasserspuren zu entfernen. Anschließend wurden 96,3 g der Komponente A1, 46,6 g der Komponente 5 und 34,5 g Diethanolamin zugegeben. Nachdem die Mischung 4 h bei 120°C gerührt worden war, war kein Epoxid mehr nachweisbar. Es wurde mit 161 g Isobutanol und 18 g Butylglykol auf einen Feststoffgehalt von 65 Gew.% verdünnt. Das Produkt besaß eine Aminzahl von 70 mg KOH/g (fest) und eine Platten-Kegel-Viskosität von 1140 mPas, gemessen bei 75°C.

Komponente B4

485 g eines Diglycidylethers aus Bis-(4-hydroxyphenyl)-2,2-propan und Epichlorhydrin mit einem Äquivalentgewicht von 485 wurden in 121,3 g Toluol zum Rückfluß erhitzt, um eventuell vorhandene Wasserspuren zu entfernen. Anschließend wurden 243,5 g der Komponente A2, 77,7 g der Komponente 5 und 25 g Ethylethanolamin zugegeben. Nachdem die Mischung 4 h bei 120°C gerührt worden war, war kein Epoxid mehr nachweisbar. Es wurde mit 123 g Isobutanol und 13 g Butylglykol auf einen Feststoffgehalt von 65 Gew.% verdünnt. Das Produkt besaß eine Aminzahl von 76 mg KOH/g (fest) und eine Platten-Kegel-Viskosität von 700 mPas, gemessen bei 75°C.

Komponente B5

485 g eines Diglycidylethers aus Bis-(4-hydroxyphenyl)-2,2-propan und Epichlorhydrin mit einem Äquivalentgewicht von 485 wurden in 121,3 g Toluol zum Rückfluß erhitzt, um eventuell vorhandene Wasserspuren zu entfernen. Anschließend wurden 313 g der Komponente A3, 77,7 g der Komponente 5 und 29,5 g Ethylethanolamin zugegeben. Nachdem die Mischung 4 h bei 120°C gerührt worden war, war kein Epoxid mehr nachweisbar. Es wurde mit 216 g Isobutanol und 24 g Butylglykol auf einen Feststoffgehalt von 65 Gew.% verdünnt. Das Produkt hatte eine Aminzahl von 70 mg KOH/g (fest) und eine Platten-Kegel-Viskosität von 1180 mPas, gemessen bei 75°C.

Komponente B6

485 g eines Diglycidylethers aus Bis-(4-hydroxyphenyl)-2,2-propan und Epichlorhydrin mit einem Äquivalentgewicht von 485 wurden in 121,3 g Toluol zum Rückfluß erhitzt, um eventuell vorhandene Wasserspuren zu entfernen. Anschließend wurden 318 g der Komponente A4, 77,7 g der Komponente 5 und 29,5 g Diethanolamin zugegeben. Nachdem die Mischung 4 h bei 120°C gerührt worden war, war kein Epoxid mehr nachweisbar. Es wurde mit 215 g Isobutanol und 24 g Butylglykol auf einen Feststoffgehalt von 66 Gew.% verdünnt. Das Produkt besaß eine Aminzahl von 68 mg KOH/g (fest) und eine Platten-Kegel-Viskosität von 1250 mPas.

Komponente B7

485 g eines Diglycidylethers aus Bis-(4-hydroxyphenyl)-2,2-propan und Epichlorhydrin mit einem Äquivalentgewicht von 485 wurden in 121,3 g Toluol zum Rückfluß erhitzt, um eventuell vorhandene Wasserspuren zu entfernen. Anschließend wurden 393 g der Komponente A5, 77,7 g der Komponente 5 und 29,5 g Diethanolamin zugegeben. Nachdem die Mischung 4 h bei 120°C gerührt worden war, war kein Epoxid mehr nachweisbar. Es wurde mit 177 g Isobutanol und 20 g Butylglykol auf einen Feststoffgehalt von 65 Gew.% verdünnt. Das Produkt besaß eine Aminzahl von 62 mg KOH/g (fest) und eine Platten-Kegel-Viskosität von 960 mPas.

Komponente B8

485 g eines Diglycidylethers aus Bis-(4-hydroxyphenyl)-2,2-propan und Epichlorhydrin mit einem Äquivalentgewicht von 488 wurden in 121,3 g Toluol zum Rückfluß erhitzt, um eventuell vorhandene Wasserspuren zu entfernen. Anschließend wurden 462,1 g der Komponente A6, 77,7 g der Komponente 5 und 29,53 g Diethanolamin zugegeben. Nachdem die Mischung 4 h bei 120°C gerührt worden war, war kein Epoxid mehr nachweisbar. Es wurde mit 200 g Isobutanol und 23 g Butylglykol auf einen Feststoffgehalt von 65 Gew.% verdünnt. Das Produkt besaß eine Aminzahl von 69 mg KOH/g (fest) und eine Platten-Kegel-Viskosität von 1440 mPas.

Komponente B9

970 g eines Diglycidylethers aus Bis-(4-hydroxyphenyl)-2,2-propan und Epichlorhydrin mit einem Äquivalentgewicht von 485 wurden in 242,5 g Toluol zum Rückfluß erhitzt, um eventuell vorhandene Wasserspuren zu entfernen. Anschließend wurden 1063 g der Komponente A7, 155,3 g der Komponente 5 und 59,1 g Diethanolamin zugegeben. Nachdem die Mischung 4 h bei 120°C gerührt worden war, war kein Epoxid mehr nachweisbar. Es wurde mit 540 g Isobutanol und 60 g Butylglykol auf einen Feststoffgehalt von 65 Gew.% verdünnt. Das Produkt besaß eine Aminzahl von 58 mg KOH/g (fest) und eine Platten-Kegel-Viskosität von 640 mPas.

IV. Herstellung der Vernetzerkomponenten

Komponente C1

Gemäß der DE-OS 27 01 002, Beispiel 1, wurde ein geblockter Isocyanatvernetzer (Polyurethanvernetzer) hergestellt, indem 218 g 2-Ethylhexanol langsam zu 291 g einer 80/20-Isomermischung von 2,4-/2,6-Toluylendiisocyanat unter Rühren in einer Stickstoffatmosphäre gegeben wurden, wobei die Reaktionstemperatur durch äußere Kühlung unter 38°C gehalten wurde. Der Ansatz wurde noch eine weitere halbe Stunde bei 38°C gehalten und dann auf 60°C erwärmt, wonach 75 g Trimethylolpropan und anschließend 0,08 g Dibutylzinndilaurat als Katalysator zugegeben wurden. Nach einer exothermen Reaktion zu Beginn wurde der Ansatz 1,5 Stunden bei 121°C gehalten, bis im wesentlichen die gesamten Isocyanatgruppen verbraucht worden waren. Der Ansatz wurde dann mit 249 g Ethylenglykolmonoethylether verdünnt.

Komponente C2

1340 g Trimethylolpropan, 3600 g Harnstoff, 3870 g Dibutylamin, 1740 g Hexamethylendiamin und 3570 g 3,3'-Dimethyl-4,4'-diaminodicyclohexylmethan wurden langsam hochgeheizt. Ab 120°C kam es zur Abspaltung von Ammoniak und der Harnstoff ging in Lösung. Innerhalb von 2 Stunden wurde die Temperatur auf 155°C erhöht, wobei starker Rückfluß auftrat und große Mengen eines weichen, kristallinen Niederschlags ausfielen. Nach weiteren 5 Stunden unter Rückfluß hatte sich der Niederschlag wieder aufgelöst und eine Temperatur von 165°C war erreicht. Nun wurden innerhalb von 2 Stunden 3870 g Dibutylamin zugetropft und nach beendeter Zugabe noch 8 Stunden auf 185°C erhitzt. Anschließend wurden bei dieser Temperatur 3600 g Dibutylamin im Vakuum abgezogen und nach dem Abkühlen auf 130°C mit 5170 g Toluol verdünnt. Das Produkt war eine farblose, viskose Flüssigkeit mit einem Feststoffgehalt von 70 Gew.%.

Komponente C3

Gemäß der EP 00 40 867, Beispiel 2d) wurde ein Polyestervernetzer hergestellt: 192 g Trimellitsäureanhydrid und 500 g Versaticsäureglycidylester, mit einem Epoxidäquivalentgewicht von 250, wurden vermischt und unter Rühren auf 100°C erwärmt. Es trat eine exotherme Reaktion auf, und die Temperatur stieg auf 190°C. Nach Abkühlen auf 140°C wurden 2 Teile Benzyldimethylamin zugegeben. Die Mischung wurde 3 Stunden bei 140°C gehalten. Es entstand ein viskoses, klares Produkt, welches mit Toluol auf einen Feststoffgehalt von 70 Gew.% verdünnt wurde.

V. Herstellung der Dispersionen

Die Komponente (B) und (C) wurden in den unten angegebenen Verhältnissen gemischt und mit Eisessig versetzt. Anschließend wurde durch langsame Wasserzugabe unter Rühren eine Dispersion hergestellt.

| Dispersion v. Beispiel | Komponente B | Komponente C | Eisessig | Wasser | LD[1] (%) |
|---|---|---|---|---|---|
| 1[2] | 915 g (B1) | 322 g (C1) | 20,0 g | 4109 g | 70 |
| 2[2] | 915 g (B2) | 322 g (C2) | 20,0 g | 4109 g | 75 |
| 3 | 915 g (B3) | 322 g (C1) | 15,6 g | 4114 g | 89 |
| 4 | 915 g (B4) | 322 g (C1) | 15,6 g | 4114 g | 92 |
| 5 | 915 g (B5) | 322 g (C1) | 15,6 g | 4114 g | 94 |
| 6 | 915 g (B5) | 322 g (C2) | 15,6 g | 4114 g | 85 |
| 7[3] | 915 g (B5) | 322 g (C3) | 15,6 g | 4114 g | 88 |
| 8 | 915 g (B6) | 322 g (C1) | 15,6 g | 4114 g | 83 |
| 9 | 915 g (B7) | 322 g (C1) | 15,6 g | 4114 g | 90 |
| 10 | 915 g (B8) | 322 g (C1) | 15,6 g | 4114 g | 93 |
| 11 | 915 g (B9) | 322 g (C1) | 15,6 g | 4114 g | 88 |

[1] Lichtdurchlässigkeit: je größer der Wert, um so feinteiliger und stabiler sind die Dispersionen.

[2] Vergleichsversuche: trotz Zugabe von mehr Essigsäure konnten nur grobteiligere Dispersionen hergestellt werden.

[3] Vor der Wasserzugabe wurden 16,1 g Bleioktoat (24 % Pb) zugesetzt.

VI. Herstellung von pigmentierten Elektrotauchlackbädern

Pigmentpaste:

Zu 525,8 g Komponente (A2) gab man 168,7 g Butylglykol, 600 g Wasser und 16,5 g Essigsäure. Dann setzte man 800 g gitandioxid, 11,0 g Ruß und 50 g basisches Bleisilikat hinzu. Es wurde auf einer Kugelmühle bis zu einer Korngröße kleiner 9 $\mu$m gemahlen. Anschließend stellte man mit Wasser einen Feststoffgehalt von 49 Gew.% ein.

Elektrotauchbäder:

Zu der jeweiligen Dispersion gab man unter Rühren 968 g der Pigmentpaste. Die Bäder wurden 120 Stunden bei 28°C gerührt. An kathodisch geschalteten zinkphosphatierten Prüftafeln aus Stahl wurden Lackfilme innerhalb 120 Sekunden bei der angegebenen Spannung abgeschieden und 20 Minuten bei 170°C eingebrannt. Die folgende Tabelle zeigt die Ergebnisse:

EP 0 296 489 B1

Ergebnisse der Lackprüfung: Schichtdicke 20 μm

| Disp. | pH | Spannung (V) | Schlagtiefung (Nm)[1] | Salzsprühtest nach DIN 53 167 Unterwanderung am Ritz (mm) |
|---|---|---|---|---|
| 1 | 7,1 | 320 | 18,08 | 1,0 |
| 2 | 7,3 | 300 | 18,08 | 1,0 |
| 3 | 7,1 | 320 | 18,08 | 0,7 |
| 4 | 7,3 | 320 | 18,08 | 0,5 |
| 5 | 7,2 | 340 | 18,08 | 0,6 |
| 6 | 7,1 | 320 | 18,08 | 0,6 |
| 7 | 7,2 | 330 | 18,08 | 0,5 |
| 8 | 7,0 | 330 | 18,08 | 0,5 |
| 9 | 7,0 | 310 | 18,08 | 0,4 |
| 10 | 6,9 | 330 | 18,08 | 0,5 |
| 11 | 6,8 | 300 | 18,08 | 0,6 |

[1] Die Schlagtiefung wurde mit einem mandrel impact Tester der Fa. Gardner nach ASTM D 2794 bestimmt.

**Patentansprüche**

1. Stickstoffbasische Gruppen tragendes, durch Protonierung mit Säure wasserverdünnbares Kunstharz, erhältlich durch Umsetzung von

   A) einem Epoxidharz mit einem mittleren Molekulargewicht $M_n$ von 300 bis 6000 und im Mittel 1,5 bis 3,0 Epoxidgruppen pro Molekül mit

   B) einem Ketimin eines primären Amins, das zusätzlich eine oder mehrere Urethangruppen enthält und gegebenenfalls

   C) einem Diketimin eines diprimären Amins, das keine Urethangruppen enthält und gegebenenfalls

   D) einem sekundären Amin, das gegebenenfalls zusätzlich eine tertiäre Aminogruppe enthält, einem Ketimin eines primären Monoamins und/oder einem Ketimin eines primär/tertiären Diamins.

2. Stickstoffbasische Gruppen tragendes, durch Protonierung mit Säure wasserverdünnbares Kunstharz nach Anspruch 1, erhältlich durch Umsetzung der Hydroxylgruppen des Reaktionsproduktes aus A), B) und gegebenenfalls C) und D) mit teilblockiertem Polyisocyanat zu Urethangruppen.

3. Kunstharz nach Anspruch 1 oder 2, erhältlich unter Verwendung von 1 bis 2 Äquivalenten der Ketimine und sekundären Amine der Komponenten B), C) und D) pro Epoxid-Äquivalent des Epoxidharzes A).

4. Kunstharz nach einem der Ansprüche 1 bis 3, erhältlich unter Verwendung eines Glycidylethers eines im Mittel mindestens zwei phenolische Hydroxylgruppen pro Molekül enthaltenden Polyphenols, der ein mittleres Molekulargewicht $M_n$ zwischen 350 und 5000 aufweist, als Epoxidharz A).

5. Kunstharz nach einem der Ansprüche 1 bis 4, erhältlich unter Verwendung einer Komponente B), die mindestens 2 Urethangruppen und bis zu 2 Ketimingruppen enthält.

6. Kunstharz nach einem der Ansprüche 1 bis 5, erhältlich unter Verwendung einer Komponente B), die durch Umsetzung eines aliphatischen Diisocyanats mit Diolen und/oder Monoalkoholen und dem Ketimin eines aliphatischen, primären Aminogruppen-tragenden Alkanolamins im Äquivalentverhältnis 1:0,1 bis 1,9:0,9 bis 0,1 hergestellt wurde.

11

**7.** Verwendung des durch Protonierung mit Säure wasserverdünnbaren Kunstharzes, gemäß einem der Ansprüche 1 bis 6 in Form einer wäßrigen Dispersion, die gegebenenfalls zusätzlich Vernetzer, organische Lösemittel, Pigmente und/oder weitere Hilfsstoffe enthält, als Überzugsmittel.

**8.** Verwendung der Dispersion nach Anspruch 7 für die kathodische Elektrotauchlackierung elektrisch leitfähiger Substrate.

**9.** Überzugsmittel, enthaltend als Bindemittel ein stickstoffbasische Gruppen tragendes, durch Protonierung mit Säure wasserverdünnbares Kunstharz gemäß einem der Ansprüche 1 bis 6 und zusätzlich einen Vernetzer.

**10.** Mit einem Lacküberzug versehener Gegenstand, erhältlich unter Verwendung eines Überzugsmittels gemäß Anspruch 9.

**Claims**

**1.** A synthetic resin which carries basic nitrogen groups and becomes water-thinnable on protonation with an acid, obtainable by reacting
A) an epoxy resin having an average molecular weight $M_n$ of from 300 to 6000 and on average from 1.5 to 3.0 epoxy groups per molecule with
B) a ketimine of a primary amine additionally containing one or more urethane groups and optionally also with
C) a diketimine of a diprimary amine containing no urethane groups and optionally also with
D) a secondary amine which may contain a tertiary amino group also, a ketimine of a primary monoamine and/or a ketimine of a primary/tertiary diamine.

**2.** A synthetic resin as claimed in claim 1, obtainable by reacting the hydroxyl groups of the reaction product of A), B) and if used C) and D) with partially blocked polyisocyanate to give urethane groups.

**3.** A synthetic resin as claimed in claim 1 or 2, obtainable by using from 1 to 2 equivalents of ketimines and secondary amines of components B), C) and D) per epoxy equivalent of epoxy resin A).

**4.** A synthetic resin as claimed in any of claims 1 to 3, obtainable by using a glycidyl ether of a polyphenol which contains on average at least two phenolic hydroxyl groups per molecule and has an average molecular weight of $M_n$ of from 350 to 5000, as epoxy resin A).

**5.** A synthetic resin as claimed in any of claims 1 to 4, obtainable by using a component B), which contains at least two urethane groups and up to 2 ketimine groups.

**6.** A synthetic resin as claimed in any of claims 1 to 5, obtainable when using a component B) which has been prepared by reacting an aliphatic diisocyanate with a diol and/or monoalcohol and with the ketimine of an aliphatic primary amino-carrying alkanolamine in an equivalent ratio of from 1:0.1 to 1.9:0.9 to 0.1.

**7.** The use of a synthetic resin as claimed in any of claims 1 to 6, in the form of an aqueous dispersion which may additionally contain a crosslinking agent, an organic solvent, a pigment and/or further auxiliary substances, as a coating composition.

**8.** The use of a dispersion as claimed in claim 7 for the cathodic electrocoating of electroconductive substrates.

**9.** A coating composition containing as the binder a synthetic resin as claimed in any of claims 1 to 6 and additionally a crosslinking agent.

**10.** A coated article obtainable using a coating composition as claimed in claim 9.

**Revendications**

1. Matière plastique portant des radicaux azotés basiques, diluable à l'eau par protonation avec un acide, que l'on peut obtenir par la réaction de

   A) une résine époxyde d'un poids moléculaire moyen $M_n$ de 300 à 6000 et comportant en moyenne 1,5 à 3,0 radicaux époxyde par molécule, avec

   B) une cétimine d'une amine primaire, qui contient complémentairement un ou plusieurs radicaux uréthanne et, éventuellement,

   C) une dicétimine d'une amine diprimaire, qui ne contient pas de radicaux uréthanne et, éventuellement,

   D) une amine secondaire, qui contient éventuellement complémentairement un radical amino tertiaire, une cétimine d'une monoamine primaire et/ou une cétimine d'une diamine primaire/tertiaire.

2. Matière plastique portant des radicaux azotés basiques, diluable à l'eau par protonation avec un acide suivant la revendication 1, que l'on peut obtenir par la conversion des radicaux hydroxyle du produit de la réaction de A), B) et éventuellement C) et D) avec un polyisocyanate partiellement bloqué en radicaux uréthanne.

3. Matière plastique suivant la revendication 1 ou 2, que l'on peut obtenir par l'utilisation de 1 à 2 équivalents des cétimines et des amines secondaires des composants B), C) et D) par équivalent d'époxyde de la résine d'époxyde A).

4. Matière plastique suivant l'une quelconque des revendications 1 à 3, que l'on peut obtenir par l'utilisation d'un éther glycidylique d'un polyphénol contenant, en moyenne, au moins deux radicaux hydroxyle phénoliques par molécule, qui présente un poids moléculaire moyen $M_n$ variant de 350 à 5000, à titre de résine d'époxyde A).

5. Matière plastique suivant l'une quelconque des revendications 1 à 4, que l'on peut obtenir par l'emploi d'un composant B), qui contient au moins 2 radicaux uréthanne et jusqu'à 2 radicaux cétimine.

6. Matière plastique suivant l'une quelconque des revendications 1 à 5, que l'on peut obtenir par l'emploi d'un composant B) qui a été préparé par la réaction d'un diisocyanate aliphatique avec des diols et/ou des monoalcools et la cétimine d'une alcanolamine aliphatique, portant des radicaux amino primaire, dans le rapport d'équivalence de 1:0,1 à 1,9:0,9 à 0,1.

7. Utilisation de la matière plastique diluable à l'eau par protonation avec un acide, suivant l'une quelconque des revendications 1 à 6, sous forme d'une dispersion aqueuse qui contient éventuellement complémentairement des agents de réticulation, des solvants organiques, des pigments et/ou d'autres adjuvants, à titre d'agent de revêtement.

8. Utilisation de la dispersion suivant la revendication 7 pour la peinture par électrodéposition cathodique ou cataphorèse de subjectiles conducteurs de l'électricité.

9. Agents de revêtement qui contiennent, à titre de liant, une matière plastique portant des radicaux azotés basiques, diluable à l'eau par protonation avec un acide suivant l'une quelconque des revendications 1 à 6 et complémentairement un agent de réticulation.

10. Objets pourvus d'un revêtement de peinture, que l'on peut obtenir par l'utilisation d'un agent de revêtement selon la revendication 9.